**Europäisches Patentamt**

**European Patent Office**

**Office européen des brevets**

(11) Veröffentlichungsnummer: **0 201 619**
**B1**

(12) **EUROPÄISCHE PATENTSCHRIFT**

(45) Veröffentlichungstag der Patentschrift: **01.08.90**

(21) Anmeldenummer: **85106088.9**

(22) Anmeldetag: **17.05.85**

(51) Int. Cl.⁵: **B 23 P 6/00,** B 21 H 1/08, B 60 B 17/00

(54) Verfahren zur werkstoffsparenden Berichtigung eines Profils eines Schienenrades.

(43) Veröffentlichungstag der Anmeldung:
**20.11.86 Patentblatt 86/47**

(45) Bekanntmachung des Hinweises auf die
**01.08.90 Patentblatt 90/31** Patenterteilung:

(84) Benannte Vertragsstaaten:
**DE FR GB IT**

(56) Entgegenhaltungen:
**DE-C- 712 710**
**GB-A- 7 899**
**GB-A- 117 650**
**GB-A- 945 087**
**US-A-3 535 906**

(73) Patentinhaber: **Wilhelm Hegenscheidt**
**Gesellschaft mbH**
**Neusser Strasse 3**
**D-5140 Erkelenz (DE)**

(72) Erfinder: **Feldewert, Herbert, Dipl.-Ing.**
**Baumschulweg 31**
**D-5140 Erkelenz (DE)**

(74) Vertreter: **Liermann, Manfred**
**Josef-Schregel-Strasse 19**
**D-5160 Düren (DE)**

Courier Press, Leamington Spa, England.

**Beschreibung**

Die Erfindung betrifft ein Verfahren zur werkstoffsparenden Berichtigung eines mindestens einen Spurkranz mit einer Spurkranzflanke und eine Lauffläche aufweisenden profils eines Eisenbahnrades, bei dem Bereiche des Profils eine Abweichung von einem Sollprofil durch Werkstoffverschleiß an Lauffläche und/oder Spurkranz aufweisen, unter Anwendung eines Zerspanungsprozesses. Hierbei kann das Schienenrad sowohl Einzelelement als auch Bestandteil eines Radsatzes sein.

Verfahren zur Berichtigung des Profils eines Schienenrades, bei dem mindestens Bereiche des Profils eine Abweichung von einem Sollprofil aufweisen, unter Anwendung eines Zerspanungsprozesses, sind lange bekannt z.B. durch den Aufsatz "Die Profilberichtigung des Lokomotiv-Radreifens" aus der Zeitschrift Werkstattstechnik, Jahrgang 1965, Heft 2, Seiten 69 bis 74. Insbesondere Bild 9 dieses Aufsatzes zeigt die verschiedenen Situationen eines solchen Profiles eines Eisenbahnrades. Es ist dort gestrichelt das Ursprungsprofil oder Neuprofil dargestellt und es ist weiter dick schwarz ausgezogen das verschlissene Profil dargestellt. Normal ausgezogen darunter ist dann das Profil dargestellt, daß nach Durchführung eines das Profil berichtigenden Zerspanungsprozesses entstanden ist. Wie zu erkennen, ist bei einer solchen Verschleißsituation, deren Hauptverschleiß im Bereich des Spurkranzes liegt, eine sehr große Menge Werkstoff zu zerspanen, um wieder ein korrektes Profil zu erhalten. Das zerspante Material aber ist sehr teuer. Aber nicht nur der zerspante Werkstoff selbst verursacht hohe Kosten, sondern es ist auch eine entsprechend hohe Bearbeitungszeit für die Zerspanung erforderlich und darüber hinaus steht das Material, das zerspant worden ist, nicht als Verschleißwerkstoff zu Verfügung, so daß durch die große Zerspanung die Gesamtlaufleistung eines Eisenbahnrades erheblich verringert wird. Man war daher im Stand der Technik zu allen Zeiten bemüht, das Zerspanungsvolumen bei der Berichtigung eines solchen Eisenbahnradprofils zu minimieren. Die radiale Lage des neu zu erstellenden Profils wurde daher in radialer Richtung so gelegt, daß es an einer Stelle das verschlissene Profil berührte. Dieser Punkt ist in Bild 9 des genannten Aufsatzes deutlich in der Spurkranzrundung zu erkennen. Um sicher zu sein, daß nicht unnötig viel Werkstoff zerspant wurde, achtete man bei der Zerspanung darauf, daß im Bereich der genannten Berührung des Neuprofils und des Verschleißprofils rundum ein kleiner Streifen unbearbeitet blieb, wodurch man die kleinstmögliche Zerspanung erreichte.

Die vorgenannten Maßnahmen blieben jedoch wegen des sehr hohen Zerspanungsvolumens unbefriedigend und so wurde im Stand der Technik insbesondere dann, wenn vorwiegend Spurkranzverschleiß auftrat, versucht, den verschlissenen Bereich durch Aufschweißung wieder aufzufüllen. Dieses Verfahren erforderte jedoch eine außerordentlich aufwendige Technologie und verbrauchte außerdem ebenfalls Werkstoff, nämlich den Werkstoff der Schweißelektroden. Darüber hinaus war die notwendige zerspanende Nachbearbeitung im Bereich der Aufschweißung sehr schwierig und langwierig. Es hat sich daher dieses Verfahren auch nicht durchgesetzt.

Es wird weiter mit der GB-A-7899 vorgeschlagen, ein im Bereich der Lauffläche und/oder des Spurkranzes verschlissenes Rad in eine Form einzubringen und diese Form dann durch einen Preßvorgang oder Walzvorgang wieder auszufüllen. Da das Volumen des verschlissenen Werkstoffes jedoch unbekannt ist, kann auch beim Preßvorgang in einer geschlossenen Form nicht festgestellt werden ob nach erfolgter Schließung der Preßform an der Lauffläche alle durch Verschleiß entstandenen Lücken ausgefüllt sind. Ebenso ist auch eine Überfüllung denkbar, die dann entsprechende Absätze mit unzulässigen Kerbspannungen erzeugt. Da der Spurkranzdurchmesser an einem Verschleißprofil größer sein kann als an einem Neuprofil, kann es vorkommen, daß das Rad nicht in die Form eingelegt werden kann. Die Art der Werkstoffverdrängung bedingt, daß der Durchmesser der den Radreifen tragenden und mit der Nabe verbindenden Radscheibe mit fortschreitendem Verschleiß der Lauffläche immer größer wird. Hierdurch wird die Festigkeit und das Schallabstrahlungsverhalten des Rades nachteilig beeinflußt. Die Maßnahmen nach dieser Schrift stellen somit lediglich eine inzwischen überholte Alternative zum eingangs beschriebenen Verfahren dar.

Der Erfindung liegt somit die Aufgabe zugrunde ein Verfahren der eingangs beschriebenen Art vorzuschlagen, mit dem es möglich wird ein korrektes Profil werkstoffsparender als bisher herzustellen, ohne hierbei neuen Werkstoff aufzutragen.

Diese Aufgabe ist erfindungsgemäß dadurch gelöst, daß profilbereiche mit einem geringeren Verschleiß ermittelt werden, worauf diese einem Umformvorgang unterworfen werden, wodurch Werkstoff dieser Profilbereiche verdrängt wird und in tiefer liegende Bereiche fließt, um die am stärksten verschlissenen Bereiche mindestens teilweise mit Werkstoff aufzufüllen, bevor die radiale Lage eines berichtigten Profils bestimmt wird, welches durch den Zerspanungsprozeß hergestellt wird, wobei dieses berichtigte Profil gegenüber dem Verschleißprofil radial nach außen versetzt ist. Durch einen solchen Umformvorgang wird Werkstoff, der im Stand der Technik zumindest teilweise durch eine Zerspanung verloren geht, genutzt, um verschlissene und deformierte Profilbereiche aufzufüllen, so daß im Ergebnis eine Werkstoffverteilung erreicht wird, wodurch es gelingt, die radiale Lage des neu herzustellenden korrekten Profils weiter nach auswärts zu verlagern, wodurch eine entsprechende Einsparung an zu zerspanendem Werkstoff erreicht wird. Gleichzeitig steht dieses nicht zerspante Material dem Verschleiß zur Verfügung, so daß die Laufleistung solcher Räder entsprechend erhöht wird.

Besonders unangenehm ist bei solchen Schienenrädern der Verschleiß im Bereich des Spurkranzes, wobei bei dieser Verschleißart die innere Spurkranzflanke abschleißt und deformiert wird, so daß die Spurkranzdicke abnimmt. Hierbei kann der Spurkranz radial nach außen sogar über die ursprüngliche Höhe hinaus verformt werden. Bei Schienennetzen mit häufigen Krümmungen tritt dieser Spurkranzverschleiß bei den darauf betriebenen Schienenrädern auf. Der Spurkranzverschleiß ist dann groß, während der Verschleiß im Bereich der Lauffläche relativ gering sein kann. Die Dickenabnahme des Spurkranzes durch Verschleiß und Deformation führt dazu, daß das neu zu erstellende korrekte Profil sehr stark radial einwärts liegt, weil ja das neu zu erstellende Profil radial so gelegt werden muß, daß für eine korrekte Spurkranzdicke genügend Werkstoff zur Verfügung steht.

Liegt, wie oben beschrieben, überwiegend oder ausschließlich Spurkranzverschleiß vor, so gelingt es, das notwendige Zerspanungsvolumen für eine Wiederherstellung eines korrekten Profils dadurch zu minimieren, daß der Spurkranz einer Umformung zur Herstellung einer gegenüber der Ausgangssituation größeren Dicke unterworfen wird, wodurch Werkstoff von der Spurkranzkuppe des Spurkranzes verdrängt wird und in tiefer liegende Bereiche fließt, um die am stärksten verschlissenen Bereiche mindestens teilweise mit Werkstoff aufzufüllen, bevor die radiale Lage eines berichtigten Profils bestimmt wird, welches durch den Zerspanungsprozeß hergestellt wird, wobei dieses berichtigte Profil gegenüber dem Verschleißprofil radial nach außen versetzt ist. Dies bedeutet, daß z.B. durch den Umformvorgang die Höhe des Spurkranzes vermindert und dadurch gleichzeitig die Dicke des Spurkranzes vergrößert wird. Der Umformvorgang selbst kann beispielsweise ein Schmiedeprozeß oder ein Walzprozeß sein. Dadurch, daß der Spurkranz durch den Umformvorgang dicker gemacht wird, kann eine günstigere radiale Lage des durch die Berichtigung neu herzustellenden Profiles erreicht werden und dadurch das notwendige Zerspanungsvolumen minimiert werden.

Es ist aber auch denkbar, daß ein Verschleiß vorwiegend an der Lauffläche auftritt derart, daß eben dieser Laufflächenverschleiß für die radiale Lage des berichtigten Profiles maßgebend ist. Bei überwiegendem Laufflächenverschleiß ist die Lauffläche im mittleren Bereich abgeschlissen und im äußeren Bereich noch fast vollständig erhalten. Dieser äußere, fast vollständig erhaltene Bereich muß für die Erstellung des berichtigten Profiles bisher vollständig zerspant werden.

Gleiches gilt für entsprechende Werkstoffmengen im Spurkranzbereich. Auch hier gelingt eine werkstoffsparende Berichtigung dadurch, daß mindestens Bereiche der Lauffläche einer Umformung unterworfen werden, wobei in radialer Richtung höher liegende Werkstoffteile mindestens teilweise verdrängt und dadurch in radial tiefer liegende, stärker verschlissene Bereiche transportiert und dadurch diese Bereiche mindestens teilweise aufgefüllt werden, bevor die radiale Lage eines berichtigten Profils bestimmt wird welches durch den Zerspanungsprozeß hergestellt wird, wobei dieses berichtigte Profil gegenüber dem Verschleißprofil radial nach außen versetzt ist. Auch hierdurch gelingt wieder eine Verteilung des Werkstoffes, der im Stand der Technik zerspant wird. Der solcherart verteilte Werkstoff muß nicht mehr zerspant werden und es ist zur Wiederherstellung des berichtigten Profiles infolge der Auffüllung der zu tief liegenden verschlissenen Profilbereiche die bisher notwendige große Spantiefe, um diesen tief liegenden verschlissenen Bereich zu erreichen, nicht mehr erforderlich, da ja dieser tief liegende Bereich durch die Auffüllung höher gekommen ist. Das neu zu erstellende Profil kann also radial weiter auswärts liegen. Somit müssen nur noch geringe Werkstoffmengen zerspant werden und es wird durch die höhere Ausnutzung des Werkstoffs die Laufleistung solcher Räder wiederum beträchtlich erhöht.

Die Erfindung soll nun anhand der beigefügten Zeichnungen näher erläutert werden.

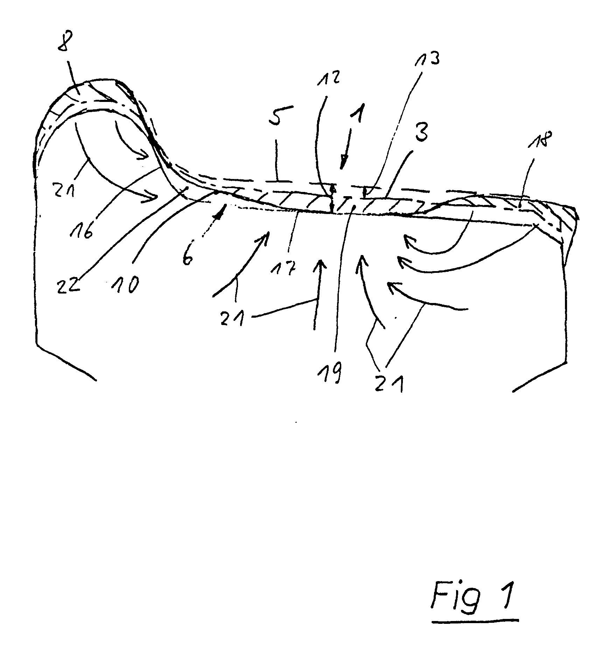

Es zeigen: Figur 1 Profil eines Eisenbahnradkranzes im Radialschnitt (Schnittfläche unschraffiert), verschiedene Profilarten überlagert dargestellt, bei überwiegendem Laufflächenverschleiß

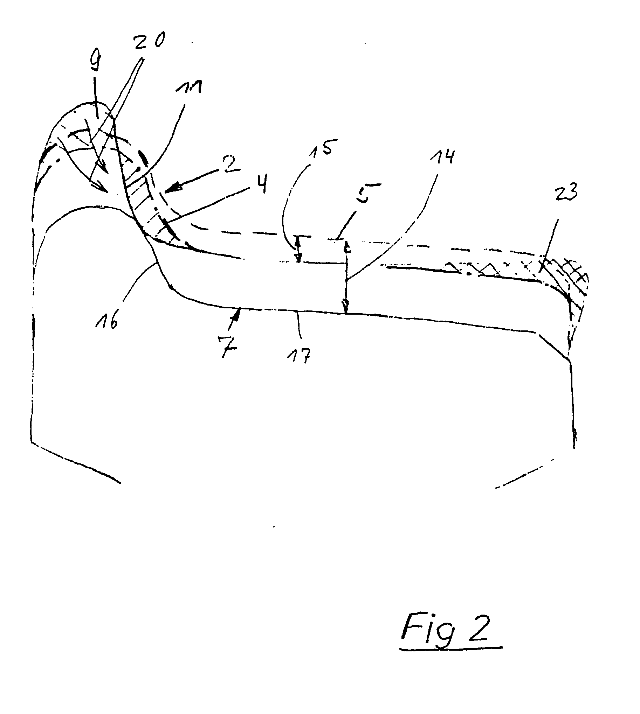

Figur 2 Darstellung wie Figur 1, jedoch bei überwiegendem Spurkranzverschleiß

Figur 1 zeigt im Radialschnitt das Profil eines Eisenbahnradkranzes eines Eisenbahnrades. Die gestrichelte Linie 5 markiert hierbei das ursprüngliche unverschlissene Ausgangsprofil. Dies gilt ebenfalls für die Darstellung nach Figur 2. Während Figur 1 ein Verschleißprofil 10 mit überwiegendem Laufflächenverschleiß, also Verschleiß im Bereich 1 zeigt, zeigt Figur 2 ein Verschleißprofil 11 mit überwiegendem Spurkranzverschleiß, also Verschleiß im Bereich 2. Wie in Figur 2 zu erkennen, ist der Spurkranz 9 nicht nur im Bereich 2 verschlissen sondern auch deformiert, so daß sein oberer Bereich über den Verlauf des Ausgangsprofils 5 hinaus verformt ist. Dies muß jedoch auch bei überwiegendem Spurkranzverschleiß nicht immer auftreten.

Der Spurkranz 8 nach Figur 1 ist nur geringfügig verschlissen und liegt in seinem äußeren Bereich noch in der Kontur des Ausgangsprofils 5.

Das Verschleißprofil 10 nach Figur 1 erzwingt im Stand der Technik eine Reprofilierung, beispielsweise durch eine Umfangsfräsoperation oder durch eine Drehoperation bis auf die Kontur des berichtigten Profils 6. Damit muß also das berichtigte Profil 6 um den Betrag 12 gegenüber dem Ausgangsprofil 5 radial einwärts verlagert werden. Der Bereich der Kuppe des Spurkranzes 8 sowie die höher liegenden Werkstoffteile 18 und ein Bereich 22 an der Spurkranzkehle müssen somit nach der Methode des Standes der Technik zerspant werden. Um diese Zerspanung kostbaren Werkstoffes zu vermeiden, werden nach der Erfindung die höher liegenden Werkstoffteile 18 einer Umformung, beispielsweise durch Walzen oder Schmieden, unterzogen, wodurch Werkstoff etwa so wie durch die Pfeile 21 angedeutet, in den tiefer liegenden Bereich 19 fließt, so daß sich der Bereich 18 senkt und der Bereich 19 anhebt. Bei Bedarf kann hier auch der links geneigt schraffierte Teil der Spurkranzkuppe des Spurkranzes 8 umgeformt werden, so daß auch hier Werkstoff etwa in Richtung der Pfeile 21 fließt. Es wird somit im Bereich der höher liegenden Werkstoffteile 18 und ggfls. im Bereich der Spurkranzkuppe des Spurkranzes 8 der links geneigt schraffierte Werkstoffteil verdrängt und es wird hierdurch der Bereich 1 der Lauffläche 17 angehoben, so wie durch die rechts geneigt liegende Schraffur in diesem Bereich angedeutet. Durch diese Maßnahmen ist es möglich, die Lage des nach den Methoden des Standes der Technik berichtigten Profils 6 mit Spurkranz 8 und innerer Spurkranzflanke 16, der sich die Lauffläche 17 anschließt, radial weiter nach außen zu legen, so daß ein zu berichtigendes Profil 3 gewählt werden kann. Dieses zu berichtigende Profil 3 liegt nur noch um den Betrag 13 vom Ausgangsprofil 5 entfernt. Es gelingt also mit einem geringeren Zerspanungsvolumen und ohne daß Fremdwerkstoff zusätzlich aufgetragen wird, ein berichtigtes profil 3 herzustellen in radial weiter außen liegender Position als das Profil 6, das nach den Methoden des Standes der Technik hätte hergestellt werden müssen. Hierdurch wird Werkstoff eingespart und Laufleistung erhöht.

Besonders deutlich treten die Vorteile der Erfindung hervor, wenn an dem Eisenbahnrad, dessen Profil zu berichtigen ist, starker Spurkranzverschleiß vorliegt, wie dies in Figur 2 dargestellt ist. Mit der üblichen Methode des Standes der Technik müßte bei einer Ausgangssituation nach Figur 2 mit dem Verschleißprofil 11 ein Profil 7 hergestellt werden, dessen Lauffläche 17 um den Betrag 14 vom Ausgangsprofil 5 radial nach innen versetzt ist. Dies ist notwendig, weil sonst der Spurkranz 9 mit der korrekten Lage der inneren Spurkranzflanke 16 nicht erzeugt werden könnte. Der verschlissene Spurkranznach dem Profil 11 ist für die Wiederherstellung eines korrekten Spurkranzes zu schmal. Die Tatsache, daß am Spurkranz Verschleiß und Deformation auftritt, hat zur Folge, daß auch im Bereich der Lauffläche 17 ganz unnötig erhebliche Mengen Werkstoff zerspant werden müssen. Dieser zerspante Werkstoff steht dem Verschleiß durch Laufleistung nicht mehr zur Verfügung.

Um den beschriebenen unbefriedigenden Zustand zu verbessern, ohne Fremdwerkstoff auftragen zu müssen, wird der verschlissene Spurkranz 9 einer Umformoperation, beispielsweise durch Walzen oder Schmieden, unterworfen und hierdurch von der Spurkranzkuppenspitze des Spurkranzes 9 Werkstoff etwa in Richtung der Pfeile 20 verdrängt, so daß etwa die Werkstoffmenge, die an der Spurkranzspitze links geneigt schraffiert ist, verdrängt wird und dabei den Spurkranz dicker macht, beispielsweise um den rechts geneigt schraffierten Betrag. Durch diese Verdickung des Spurkranzes 9 gelingt es ein zu berichtigendes profil 4 zu wählen, das nur noch um den Betrag 15 vom Ausgangsprofil 5 entfernt ist. Besonders im Bereich der Lauffläche kann damit Werkstoff eingespart werden, der dem Differenzbetrag zwischen dem Betrag 14 und dem Betrag 15 entspricht. Zur Fertigstellung des zu berichtigenden Profils 4 genügt eine geringfügige Korrektur an der Lauffläche im umgeformten Bereich es muß zusätzlich lediglich noch der überschüssige Werkstoff, im Bereich 23 in Kreuzschraffur gekennzeichnet, entfernt werden.

Durch die geeignete Umformung des verschlissenen Profils und insbesondere durch die geeignete Umformung des verschlissenen Spurkranzes gelingt es, ohne daß hierdurch der Auftrag von Fremdwerkstoff erforderlich wäre, den vorhandenen Werkstoff durch geeignete Verteilung besser auszunützen und ein berichtigtes Profil in günstigerer radialer Lage zu erzeugen. Hierdurch wird teurer Radreifenwerkstoff eingespart und die Laufleistung solcher Räder beträchtlich erhöht.

Liste der verwendeten Bezugszeichen
1 Bereich
2 Bereich
3 zu berichtigendes Profil
4 zu berichtigendes Profil
5 Ausgangsprofil
6 berichtigtes Profil (Stand der Technik)
7 berichtigtes Profil (Stand der Technik)
8 Spurkranz
9 Spurkranz
10 Verschleißprofil
11 Verschleißprofil
12 Betrag
13 Betrag
14 Betrag
15 Betrag
16 innere Spurkranzflanke
17 Lauffläche
18 höher liegende Werkstoffteile
19 tiefer liegender Bereich
20 Pfeil
21 Pfeil
22 Bereich
23 Bereich

**Patentansprüche**

1. Verfahren zur werkstoffsparenden Berichtigung eines mindestens einen Spurkranz mit einer Spurkranzflanke und eine Lauffläche aufweisenden Profils eines Eisenbahnrades, bei dem Bereiche des Profils eine Abweichung von einem Sollprofil durch Werkstoffverschleiß an Lauffläche und/oder Spurkranz aufweisen, unter Anwendung eines Derspanungsprozesses, dadurch gekennzeichnet, daß Profilbereiche mit einem geringeren Verschleiß ermittelt werden, worauf diese einem Umformvorgang unterworfen werden, wodurch Werkstoff dieser Profilbereiche verdrängt wird und in tiefer liegende Bereiche (19) fließt, um die am stärksten verschlissenen Bereiche (1, 2) mindestens teilweise mit Werkstoff aufzufüllen, bevor die radiale Lage eines berichtigten Profils (3, 4) bestimmt wird, welches durch den Zerspanungsprozeß hergestellt wird, wobei dieses berichtigte Profil (3, 4) gegenüber dem Verschleißprofil (10, 11) radial nach außen versetzt ist.

2. Verfahren zur werkstoffsparenden Berichtigung eines mindestens einen Spurkranz mit einer Spurkranzflanke und eine Lauffläche aufweisenden Profils eines Eisenbahnrades, bei dem mindestens Bereiche der Spurkranzflanke eine Abweichung von einem Sollprofil durch Werkstoffverschleiß in form von überwiegendem Spurkranzverschleiß in Richtung einer geringer werdenden Dicke des Spurkranzes aufweisen, unter Anwendung eines Zerspanungsprozesses, dadurch gekennzeichnet, daß der Spurkranz (9) einer Umformung zur Herstellung einer gegenüber der Ausgangssituation (11) größeren Dicke unterworfen wird, wodurch Werkstoff von der Spurkranzkuppe des Spurkranzes verdrängt wird und in tiefer liegende Bereiche fließt, um die am stärksten verschlissenen Bereiche mindestens teilweise mit Werkstoff aufzufüllen, bevor die radiale Lage eines berichtigten Profils (4) bestimmt wird, welches durch den Zerspanungsprozeß hergestellt wird, wobei dieses berichtigte profil gegenüber dem Verschleißprofil (11) radial nach außen versetzt ist.

3. Verfahren zur werkstoffsparenden Berichtigung eines mindestens einen Spurkranz mit einer Spurkranzflanke und eine Lauffläche aufweisenden Profils eines Eisenbahnrades, bei dem mindestens Bereiche der Lauffläche eine Abweichung von einem Sollprofil durch Werkstoffverschleiß in Form von überwiegendem Laufflächenverschleiß aufweisen, unter Anwendung eines Zerspanungsprozesses dadurch gekennzeichnet, daß mindestens Bereiche (1, 18) der Lauffläche (17) einer Umformung unterworfen werden, wobei in radialer Richtung höher liegende Werkstoffteile (18) mindestens teilweise verdrängt und dadurch in radial tiefer liegende, stärker verschlissene Bereiche (19) tranportiert und dadurch diese Bereiche mindestens teilweise aufgefüllt werden, bevor die radiale Lage eines berichtigten Profils (3) bestimmt wird, welches durch den Zerspanungsprozeß hergestellt wird, wobei dieses berichtigte Profil gegenüber dem Verschleißprofil (10) radial nach außen versetzt ist.

**Revendications**

1. Procédé pour rectifier, en économisant de la matière, un profil présentant au moins un boudin comportant un flanc de boudin, et une surface de roulement d'une roue de chemin de fer dans laquelle des zones du profil présentent un écart par rapport à un profil prescrit par suite d'une usure de la matière au niveau de la surface de roulement et/ou du boudin, procédé utilisant un enlèvement de copeaux et caractérisé en ce que l'on détermine des zones du profil présentant une usure moindre, après quoi, on soumet ces zones à un processus de déformation au cours duquel de la matière de ces zones du profil est repoussée pour fluer dans des zones (19) plus basses, afin de remplir au moins partiellement de matière les zones (1, 2) les plus fortement usées, avant de déterminer la position radiale d'un profil rectifié (3, 4) réalisé par l'enlèvement de copeaux, ce profil rectifié (3, 4) étant décalé radialement vers l'extérieur par rapport au profil d'usure (10, 11).

2. Procédé pour rectifier, en économisant de la matière, un profil présentant au moins un boudin comportant un flanc de boudin, et une surface de roulement d'une roue de chemin de fer dans laquelle au moins des zones du flanc de boudin présentent un écart par rapport à un profil prescrit par suite d'une usure de la matière sous la forme d'une usure prédominante du boudin dans le sens d'une diminution de l'épaisseur de celui-ci, un procédé utilisant un enlèvement de copeaux et caractérisé en ce que pour obtenir une épaisseur plus grande par rapport à la situation de départ (11), on soumet le boudin (9) à une déformation au cours de laquelle de la matière est repoussée depuis le sommet du boudin pour fluer dans des zones basses, afin de remplir au moins partiellement de matière les zones les plus fortement usées, avant de déterminer la position radiale d'un profil rectifié (4) réalisé par l'enlèvement de copeaux, ce profil rectifié étant décalé radialement vers l'extérieur par rapport au profil d'usure (11).

3. Procédé pour rectifier, en économisant de la matière, un profil présentant au moins un boudin comportant un flanc de boudin, et une surface de roulement d'une roue de chemin de fer dans laquelle au moins des zones de la surface de roulement présentent un écart par rapport à un profil prescrit par suite d'une usure de la matière sous la forme d'une usure prédominante de la surface de roulement, procédé utilisant un enlèvement de copeaux et caractérisé en ce que l'on soumet au moins des zones (1, 18) de la surface de roulement (17), à une déformation au cours de laquelle des parties de matière (18) plus hautes en direction radiale sont au moins partiellement repoussées et, de ce fait, déplacées dans des zones (19) plus fortement usées plus basses radialement, pour qu'ainsi, ces zones soient au moins partiellement remplies, avant de déterminer la position radiale d'un profil rectifié (3) réalisé par l'enlèvement de copeaux, ce profil rectifié étant décalé radialement vers l'extérieur par rapport au profil d'usure (10).

**Claims**

1. Process for the material-saving correction, including the use of a cutting process, of a profile of a railroad vehicle wheel having at least one flange with a flange flank and having a rolling surface, wherein regions of the profile deviate from a desired profile through material wear of the rolling surface and/or flange, characterised in that profile regions with a lesser degree of wear are detected, and these latter regions are subjected to a process of deformation in which material from these profile regions is displaced and caused to flow into deeper lying regions (19) in order to fill the most worn regions (1, 2) at least partially with material, before the radial position of a corrected profile (3, 4) is fixed, the latter being created by the cutting process, wherein this corrected profile (3, 4) is radially outwardly offset relative to the worn profile (10, 11).

2. Process for the material-saving correction, including the use of a cutting process, of a profile of a railroad vehicle wheel having at least one flange with a flange flank and having a rolling surface, wherein at least regions of the flange flank deviate from a desired profile through material wear in the form of predominantly flange wear in the sense of reducing the thickness of the flange, characterised in that the flange (9) is subjected to a process of deformation in order to produce a greater thickness as compared with the initial condition (11), wherein material from the crest of the flange is displaced and flows into deeper lying regions in order to fill the most worn regions at least partially with material, before the radial position of a corrected profile (4) is fixed, the latter being created by the cutting process, wherein this corrected profile is radially outwardly offset relative to the worn profile (11).

3. Process for the material-saving correction, including the use of a cutting process, of a profile of a railroad vehicle wheel having at least one flange with a flange flank and having a rolling surface, wherein at least regions of the rolling surface deviate from a desired profile through material wear in the form of predominantly rolling surface wear, characterised in that at least regions (1, 18) of the rolling surface (17) are subjected to a process of deformation in which radially more prominent material areas (18) are at least partially displaced and are thereby transported into radially deeper lying regions (19) which are more worn so that these latter regions are at least partially filled, before the radial position of a corrected profile (3) is fixed, the latter being created by the cutting process, wherein this corrected profile is radially outwardly offset relative to the worn profile (10).

EP 0 201 619 B1

Fig 1

*Fig 2*